# EUROPEAN PATENT APPLICATION

(11) **EP 4 380 192 A1**
(43) Date of publication of application: **05.06.2024**
(21) Application number: 22849243.5
(22) Date of filing: 12.07.2022
(51) Int. Cl.: H04R 3/04, B60Q 5/00, G10K 15/04, H04R 29/00

(54) **ELECTRIC DEVICE AND MANUFACTURING METHOD FOR ELECTRIC DEVICE**

(30) Priority: 27.07.2021 JP 2021122409
(71) Applicant: Denso Electronics Corporation, Anjo-city, Aichi 446-8503 (JP)
(72) Inventor: MIYATA Susumu, Anjo-city, Aichi 446-8503 (JP); YAMAMOTO Chikara, Anjo-city, Aichi 446-8503 (JP); SHIBATA Yoshiki, Anjo-city, Aichi 446-8503 (JP)
(74) Representative: Kuhnen & Wacker Patent- und Rechtsanwaltsbüro PartG mbB
(86) International application number: PCT/JP2022/027402
(87) International publication number: WO 2023/008179

(57) **Abstract**

An electric device includes a sounding body (30), a sound source storing unit (54) storing actual use sound sources, a correction value storing unit (54), a sound pressure correction unit (S120), and a control unit (S130, S140). The correction value storing unit stores correction values for correcting the actual use sound sources, respectively, so that respective sound pressures of the actual use sound sources reproduced from the sounding body are brought close to respective target values when the actual use sound sources are reproduced by the sounding body. The sound pressure correction unit obtains corrected actual use sound sources by correcting the actual use sound sources with the corresponding correction values. The control unit synthesizes the corrected actual use sound sources and controls the sounding body to reproduce a synthesized actual use sound source from the sounding body.

## Description

### CROSS REFERENCE TO RELATED APPLICATION

This application is based on Japanese Patent Application No. 2021-122409 filed on July 27, 2021, the contents of which are incorporated herein by reference.

### TECHNICAL FIELD

The present disclosure relates to an electric device and a manufacturing method for an electric device.

### BACKGROUND ART

Conventionally, there has been a sound generator in which a sounding body that generates sound is housed in a housing, for example, as disclosed in Patent Literature 1.

### PRIOR ART LITERATURES

### PATENT LITERATURE

Patent Literature 1: JP 2018-121249 A

### SUMMARY

The present inventors have studied a sound generator in which a circuit board is housed in a housing together with a sounding body, and the circuit board is mounted with an electronic circuit that controls the sounding body to generate sound from the sounding body.

In such sound generators (that is, electric devices), there is an issue that a sound pressure generated from the sounding body varies among the sound generators.

In view of the above, objects of the present disclosure are to provide an electric device in which variation in sound pressure among electric devices is reduced, and to provide a manufacturing method of the electric device.

An electric device according to a first aspect of the present disclosure includes a sounding body configured to generate sound, a sound source storing unit storing a plurality of actual use sound sources, a correction value storing unit, a sound pressure correction unit, and a control unit. The correction value storing unit stores a plurality of correction values for correcting the plurality of actual use sound sources, respectively, so that respective sound pressures of the plurality of actual use sound sources reproduced from the sounding body are brought close to respective target values when the plurality of actual use sound sources is reproduced by the sounding body. The sound pressure correction unit obtains a plurality of corrected actual use sound sources by correcting the plurality of actual use sound sources with corresponding correction values among the plurality of correction values. The control unit synthesizes the corrected actual use sound sources to obtain a synthesized actual use sound source and controls the sounding body to reproduce the synthesized actual use sound source from the sounding body.

In the electric device according to the first aspect, the control unit synthesizes the plurality of corrected actual use sound sources obtained by correcting the plurality of actual use sound sources with corresponding correction values among the plurality of correction values, and reproduces the synthesized actual use sound source from the sounding body. Therefore, it is possible to reduce variations in sound pressure among electric devices.

An electric device according to a second aspect of the present disclosure includes a sounding body configured to generate sound, a sound source storing unit storing an actual use sound source, a correction value storing unit, a sound pressure correction unit, and a control unit. The correction value storing unit stores a correction value for correcting the actual use sound source so that a sound pressure of the actual use sound source reproduced from the sounding body is brought close to a target value when the actual use sound source is reproduced by the sounding body. The sound pressure correction unit obtains a corrected actual use sound source by correcting the actual use sound source with the correction value. The control unit controls the sounding body to reproduce the corrected actual use sound source from the sounding body.

In the electric device according to the second aspect, the control unit controls the sounding body to reproduce the corrected actual use sound source obtained by correcting the actual use sound source with the correction value. Therefore, it is possible to provide electric devices in which variation in sound pressure among the electric devices is reduced.

A manufacturing method for an electric device according to a third aspect of the present disclosure includes: preparing a workpiece of the electric device including a sounding body, a control unit configured to control the sounding body, and a sound source storing unit storing a plurality of actual use sound sources; controlling the sounding body by a controller via the control unit to cause the sounding body to generate an inspection sound of a frequency band including respective frequency bands of the plurality of actual use sound sources; causing a sound pressure inspection device to detect a sound pressure of the inspection sound generated by the sounding body; calculating, by the controller, a plurality of correction values for bringing respective sound pressures of the plurality of actual use sound sources generated from the sounding body to respective target values when the plurality of actual use sound sources is reproduced by the sounding body, based on the sound pressure that is detected by the sound pressure inspection device; and storing the plurality of correction values that is calculated by the controller on the workpiece.

According to the manufacturing method according to the third aspect, it is possible to manufacture electric devices in which variation in sound pressure among the electric devices is reduced. Here, the workpiece is an electric device in a state of being manufactured in a process of manufacturing the electric device.

A manufacturing method for an electric device according to a fourth aspect of the present disclosure includes: preparing a workpiece of the electric device including a sounding body, a control unit configured to control the sounding body, and a sound source storing unit storing an actual use sound source; controlling the sounding body by a controller via the control unit to cause the sounding body to generate an inspection sound of a frequency band including a frequency band of the actual use sound source; causing a sound pressure inspection device to detect a sound pressure of the inspection sound generated by the sounding body; calculating, by the controller, a correction value for bringing a sound pressure of the actual use sound source generated from the sounding body to a target value when the actual use sound source is reproduced by the sounding body based on the sound pressure detected by the sound pressure inspection device; and storing the correction value that is calculated by the controller on the workpiece.

According to the manufacturing method according to the fourth aspect, it is possible to manufacture electric devices in which variation in sound pressure among the electric devices is reduced.

### BRIEF DESCRIPTION OF DRAWINGS

FIG. 1 is a schematic diagram illustrating an overall internal configuration of an electric device according to a first embodiment of the present disclosure.
FIG. 2 is a block diagram illustrating an electrical configuration of the electric device according to the first embodiment, and is a diagram for assisting explanation of actual use sound sources, an inspection sound source, a candidate value group of main correction values, and sub correction values stored in a nonvolatile memory.
FIG. 3 is a diagram for assisting explanation of a role of the sub correction values stored in the nonvolatile memory in the electric device of FIG. 2 in the first embodiment.
FIG. 4 is a flowchart showing details of approach notification sound reproduction processing executed by a microcomputer in the electric device of FIG. 2 in the first embodiment.
FIG. 5 is a block diagram illustrating an overall configuration of a manufacturing system for writing the sub correction values in the nonvolatile memory in the electric device according to the first embodiment.
FIG. 6 is a flowchart showing the entire manufacturing process of the electric device of FIG. 2 in the first embodiment.
FIG. 7 is a flowchart illustrating inspection sound reproduction processing of a workpiece executed in the manufacturing process of the electric device of FIG. 2 in the first embodiment.
FIG. 8 is a block diagram illustrating an electrical configuration of an electric device according to a second embodiment of the present disclosure, and is a diagram for assisting explanation of an actual use sound source, an inspection sound source, a candidate value group of a main correction value, and a sub correction value stored in a nonvolatile memory.
FIG. 9 is a flowchart showing details of approach notification sound reproduction processing executed by a microcomputer in the electric device of FIG. 8 in the second embodiment.
FIG. 10 is a flowchart showing the entire manufacturing process of the electric device of FIG. 8 in the second embodiment.

### DESCRIPTION OF EMBODIMENTS

Embodiments of the present disclosure will be described below with reference to the drawings. In the following embodiments, the same or equivalent parts are denoted by the same reference numerals as each other, and explanations will be provided to the same reference numerals for simplifying descriptions.

### (First Embodiment)

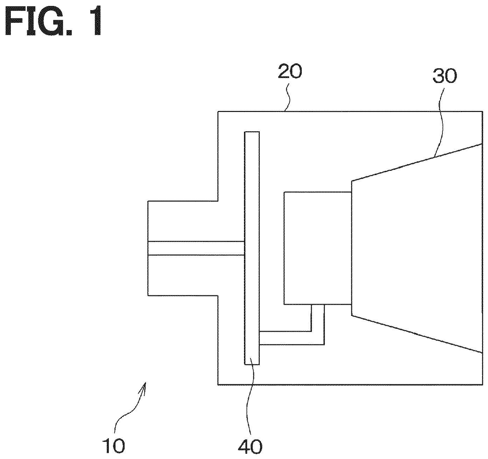

An electric device 10 according to a first embodiment of the present disclosure will be described with reference to FIGS. 1 to 6.

The electric device 10 is mounted on a vehicle such as a hybrid vehicle or an electric vehicle. The electric device 10 generates an approach notification sound for notifying pedestrians around the vehicle that the vehicle is approaching when the vehicle is traveling at a predetermined speed or less by a traveling motor.

Specifically, as shown in FIG. 1, the electric device 10 includes a housing 20, a sounding body 30, and a circuit board 40.

The housing 20 is made of a metal material or a resin material. The sounding body 30 is disposed in the housing 20 and outputs sounds such as the approach notification sound and an inspection sound to the outside of the housing 20. As the sounding body 30 of the present embodiment, for example, a speaker having a vibrating body such as a voice coil or a diaphragm and vibrating by an output signal of a power amplifier circuit 60 to generate sound can be adopted.

The circuit board 40 is disposed in the housing 20. A sounding body driving circuit 40A for driving the sounding body 30 is mounted on the circuit board 40. As described above, in the electric device 10, the sounding body 30 and the circuit board 40 are housed in the housing 20 so that the sounding body 30 and the circuit board 40 are integrated.

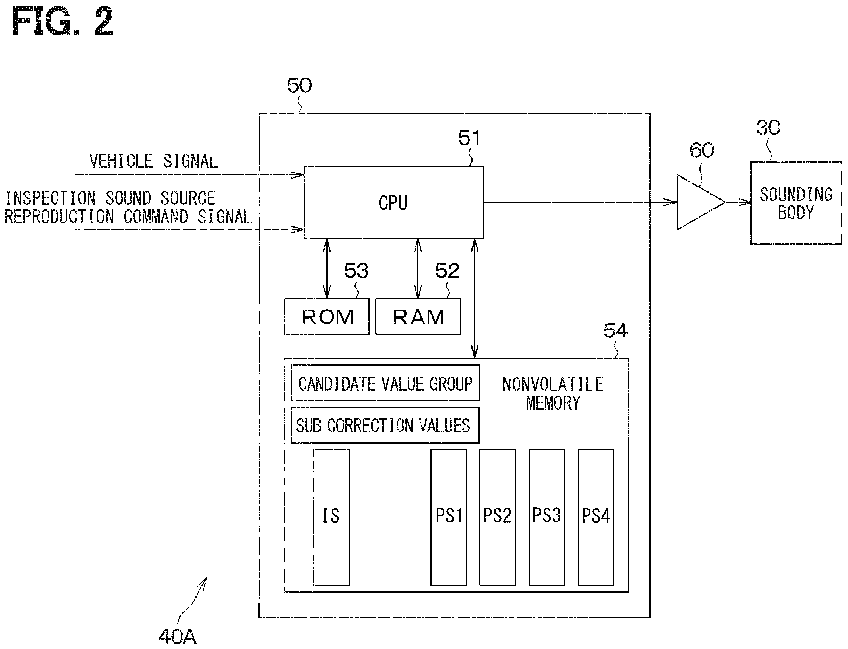

Next, details of the sounding body driving circuit 40A of the present embodiment will be described with reference to FIG. 2.

As shown in FIG. 2, the sounding body driving circuit 40A includes a microcomputer 50 and the power amplifier circuit 60. The microcomputer 50 includes a central processing unit (CPU) 51, a RAM 52, a ROM 53, and a nonvolatile memory 54. The central processing unit 51 is a control unit that executes approach notification processing and inspection processing, which will be described later, by executing computer programs. As will be described later, the central processing unit 51 outputs a synthesized sound source signal based on a first actual use sound source, a second actual use sound source, a third actual use sound source, and a fourth actual use sound source to the power amplifier circuit 60 in accordance with execution of the approach notification processing. In addition, the central processing unit 51 outputs an inspection sound signal to the power amplifier circuit 60 based on an inspection sound source stored in the nonvolatile memory 54 in accordance with execution of the inspection processing.

The RAM 52 is a writable volatile recording medium used as a working area by the central processing unit 51. The ROM 53 is a non-writable recording medium in which computer programs or the like executed by the central processing unit 51 are stored.

The nonvolatile memory 54 is a non-transitory tangible recording medium, and is a sound source storing unit in which computer programs executed by the central processing unit 51, the first actual use sound source (PS1), the second actual use sound source (PS2), the third actual use sound source (PS3), the fourth actual use sound source (PS4), and the inspection sound source (IS) are stored. In the nonvolatile memory 54, as a first correction value storing unit and a second correction value storing unit, a candidate value group of main correction values and sub correction values for respective actual use sound sources (that is, a plurality of correction values) are stored.

The first actual use sound source, the second actual use sound source, the third actual use sound source, and the fourth actual use sound source are digital data for generating sounds in different frequency bands. Hereinafter, for convenience of description, the first actual use sound source, the second actual use sound source, the third actual use sound source, and the fourth actual use sound source are also referred to as the first to fourth actual use sound sources.

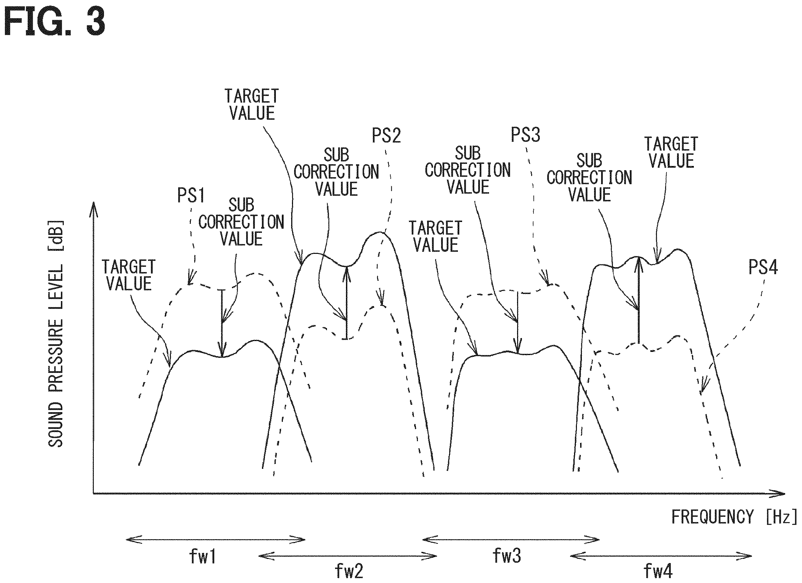

In the present embodiment, a width of a frequency band fw1 of the first actual use sound source, a width of a frequency band fw2 of the second actual use sound source, a width of a frequency band fw3 of the third actual use sound source, and a width of a frequency band fw4 of the fourth actual use sound source illustrated in FIG. 3 are set to be the same. In the present embodiment, the width of the frequency band fw1, the width of the frequency band fw2, the width of the frequency band fw3, and the width of the frequency band fw4 are each set to, for example, 1/3 octave.

The first to fourth actual use sound sources are used to generate a vehicle approach notification sound or the like by the sounding body 30 in a state where the electric device 10 is mounted on the vehicle.

The main correction values are values used to correct respective sound pressures of the first to fourth actual use sound sources generated from the sounding body 30 when the first to fourth actual use sound sources are reproduced from the sounding body 30.

As will be described later, the main correction values are determined based on vehicle information. The vehicle information of the present embodiment is vehicle information indicating a speed of the vehicle, a vehicle state such as a traveling direction of the vehicle, and a destination of the vehicle.

Here, the traveling direction indicates either forward in the traveling direction or backward in the traveling direction. Therefore, values used as the main correction values change between when the vehicle is moving forward and when the vehicle is moving backward.

Therefore, in the present embodiment, the candidate value group of the main correction values corresponding to various vehicle states and various destinations are stored in the nonvolatile memory 54 in advance.

As shown in FIG. 3, the sub correction values for the actual use sound sources are correction values for bringing respective sound pressure levels "dB" of the actual use sound sources generated from the sounding body 30 close to respective target values when the first to fourth actual use sound sources are reproduced from the sounding body 30. In the present embodiment, four sub correction values respectively corresponding to the first to fourth actual use sound sources are stored in the nonvolatile memory 54.

The inspection sound source is a sound source having a constant sound pressure, and is digital data for causing the sounding body 30 to output a test signal in order to obtain the sub correction values for the actual use sound sources. The inspection signal is set so that a frequency band FW of the inspection signal includes all of the frequency bands fw1, fw2, fw3, and fw4 of the first to fourth actual use sound sources. The inspection signal of the present embodiment is set so that the signal level is constant over the frequency band FW, for example.

The power amplifier circuit 60 amplifies the power of the synthesized sound source signal supplied from the central processing unit 51 and outputs the amplified signal to the sounding body 30.

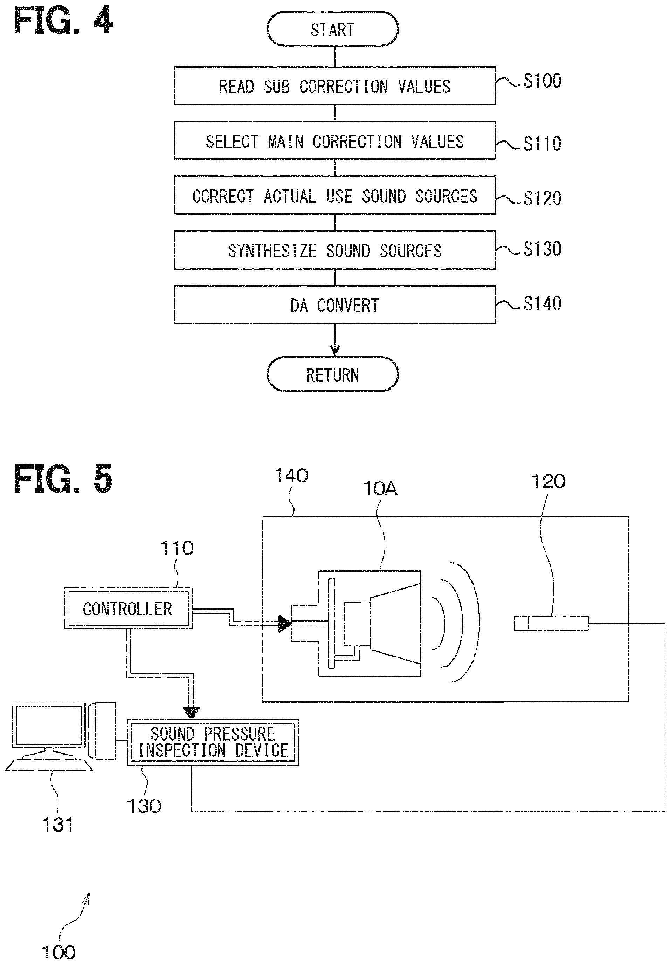

Next, the approach notification processing in the central processing unit 51 of the microcomputer 50 of the present embodiment will be described in detail with reference to FIG. 4. FIG. 4 is a flowchart showing the details of the approach notification processing in the central processing unit 51.

First, in S100, the central processing unit 51 reads four sub correction values respectively corresponding to the first to fourth actual use sound sources from the nonvolatile memory 54.

Next, in S110, the central processing unit 51 selects four main correction values respectively corresponding to the first to fourth actual use sound sources from the candidate value group of the main correction values stored in the nonvolatile memory 54 based on a vehicle signal provided from an external electronic control device.

Here, the vehicle signal includes vehicle information including the vehicle state and the destination described above. The external electronic control device is an invehicle electronic control device that is mounted on the vehicle and communicates with the electric device 10.

Specifically, the central processing unit 51 selects, as a correction value selection unit, candidate values that match the speed, the traveling direction, and the destination of the vehicle described above from the candidate value group of the main correction values stored in the nonvolatile memory 54 as the main correction values for the actual use sound sources.

That is, the central processing unit 51 selects, as the four main correction values (that is, a plurality of main correction values), four candidate values (that is, a plurality of candidate values) that match the speed, the traveling direction, the destination, and the like of the vehicle described above from the candidate value group of the main correction values.

Next, in S120, the central processing unit 51 reads, as a sound pressure correction unit, the first to fourth actual use sound sources from the nonvolatile memory 54 and corrects the first to fourth actual use sound sources with the main correction values and the sub correction values, respectively.

Hereinafter, the first to fourth actual use sound sources corrected with the main correction values and the sub correction values in this manner are referred to as corrected first to fourth actual use sound sources.

A sound pressure "Pa" has a positive correlation with a voltage. Therefore, the central processing unit 51 can obtain the corrected first to fourth actual use sound sources by correcting the signal levels (that is, the voltage value) of the first to fourth actual use sound sources with the main correction values and the sub correction values for the respective actual use sound sources in S120 described above.

Next, in S130, the central processing unit 51 synthesizes the corrected first to fourth actual use sound sources to generate a synthesized actual use sound source. Thereafter, in S140, the central processing unit 51 converts the synthesized actual use sound source generated in S130 described above from a digital signal to an analog signal, and outputs the converted analog signal to the power amplifier circuit 60.

That is, in S130 and S140, the central processing unit 51 controls the sounding body 30 to synthesize the corrected first to fourth actual use sound sources and reproduce the synthesized actual use sound source from the sounding body 30.

The central processing unit 51 repeatedly executes the sub correction value reading processing in S100, the main correction value reading processing in S110, the actual sound source correction processing in S120, the sound source synthesis processing in S130, and the DA conversion processing in S140.

Then, the power amplifier circuit 60 amplifies the power of the analog signal output from the central processing unit 51 and outputs the power-amplified analog signal to the sounding body 30. Accordingly, the sounding body 30 generates the approach notification sound based on the analog signal output from the power amplifier circuit 60.

Next, a manufacturing system 100 for writing the sub correction values for the respective actual use sound sources in the nonvolatile memory 54 of a workpiece of the electric device 10 of the present embodiment will be described with reference to FIG. 5. The workpiece of the electric device 10 is the electric device 10 in a manufacturing process of the electric device 10. Hereinafter, for convenience of description, the workpiece is referred to as a workpiece 10A in order to distinguish from the electric device 10.

The manufacturing system 100 is used in a manufacturing process for writing the sub correction values for the actual use sound sources in the nonvolatile memory 54 of the workpiece 10A. Specifically, as illustrated in FIG. 5, the manufacturing system 100 includes a controller 110, a microphone 120, and a sound pressure inspection device 130.

The controller 110 includes a microcomputer, a memory, and the like. As will be described later, the controller 110 calculates the sub correction values for the respective actual sound sources and stores the calculated sub correction values for the respective actual sound sources in the nonvolatile memory 54 of the workpiece 10A of the electric device 10.

The microphone 120 is disposed in a soundproof box 140 and detects an inspection sound reproduced by the workpiece 10A of the electric device 10. The sound pressure inspection device 130 includes a microcomputer and a memory. Together with a computer 131, the sound pressure inspection device 130 performs measurement processing of measuring the sound pressure of the inspection sound detected by the microphone 120.

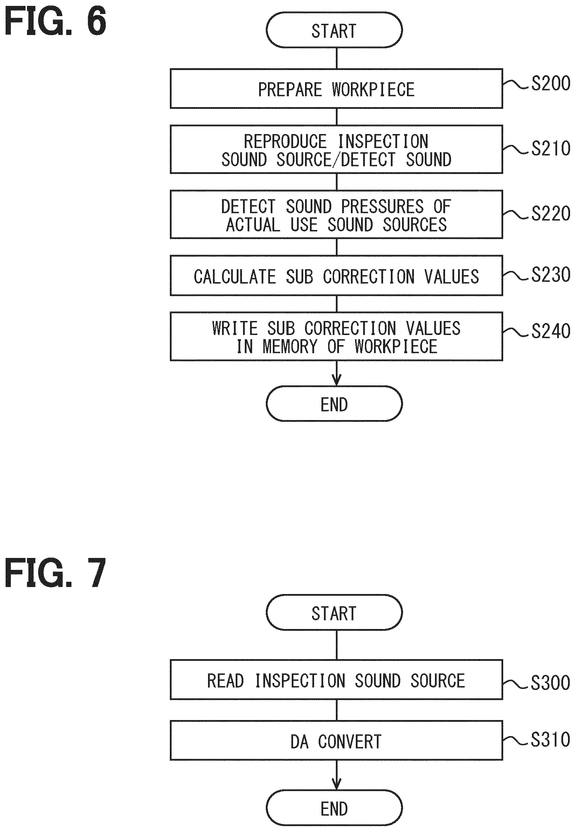

Next, the manufacturing process using the manufacturing system 100 of the present embodiment will be described with reference to FIG. 6 and FIG. 7. FIG. 6 is a flowchart showing details of the manufacturing process. FIG. 7 is a flowchart showing details of the inspection processing of the central processing unit 51 executed by the workpiece 10A in the manufacturing process.

First, in S200, the workpiece 10A of the electric device 10 in which the sub correction values for the actual use sound sources are not stored in the nonvolatile memory 54 is prepared, and the prepared workpiece 10A is disposed in the soundproof box 140.

At this time, the workpiece 10A and the controller 110 are connected by a LAN. Accordingly, preparation for writing the sub correction values for the respective actual use sound sources in the nonvolatile memory 54 of the workpiece 10A is performed. The LAN is an abbreviation for local area network. CAN communication is used as the LAN of the present embodiment.

Next, S210, the controller 110 outputs the inspection sound source reproduction command signal for reproducing the inspection sound source to the central processing unit 51 of the workpiece 10A.

At this time, in response to receiving the inspection sound source reproduction command signal from the controller 110, the central processing unit 51 of the workpiece 10A starts execution of the inspection processing according to the flowchart of FIG. 7.

First, in S300 of FIG. 7, the central processing unit 51 reads the inspection sound source from the nonvolatile memory 54, converts the read inspection sound source into an analog signal, and outputs the converted analog signal to the power amplifier circuit 60. Then, the power amplifier circuit 60 amplifies the power of the analog signal, and outputs the power-amplified analog signal to the sounding body 30 as an output signal. At this time, the sounding body 30 vibrates by the output signal of the power amplifier circuit 60 and generates the inspection sound in the soundproof box 140.

At this time, the microphone 120 detects the inspection sound generated from the sounding body 30 in the soundproof box 140 and outputs a detection signal indicating the detected inspection sound to the sound pressure inspection device 130.

Next, in S220 of FIG. 6, the sound pressure inspection device 130 performs frequency analysis on the detection signal output from the microphone 120. Then, the sound pressure inspection device 130 obtains sound pressures of the respective frequency bands of the first to fourth actual use sound sources in the inspection sound based on the result of the frequency analysis. That is, the sound pressures are detected for the respective actual use sound sources in the inspection sound. As the frequency analysis of the present embodiment, for example, a fast Fourier transform is used.

Next, in S230, the controller 110 calculates the sub correction values for the respective actual use sound sources based on the sound pressures of the actual use sound sources in the inspection sound detected by the sound pressure inspection device 130. As described above, the sub correction values for the respective actual use sound sources are correction values for bringing the levels of the sound pressures of the actual use sound sources generated from the sounding body 30 close to target values when the first to fourth actual use sound sources are reproduced from the sounding body 30.

Next, in S240, the controller 110 writes the sub correction values for the respective actual use sound sources to the nonvolatile memory 54 of the workpiece 10A.

As described above, the sub correction values for the respective actual use sound sources can be stored in the nonvolatile memory 54 of the workpiece 10A.

According to the present embodiment described above, the electric device 10 includes the sounding body 30 configured to generate sound, and the nonvolatile memory 54 that stores the first to fourth actual use sound sources for generating sounds of different frequency band and the sub correction values for the respective actual use sound sources.

The sub correction values are correction values for the respective actual use sound sources and for bringing the first to fourth actual use sound sources generated from the sounding body 30 close to the target values when the first to fourth actual use sound sources are reproduced by the sounding body 30.

The central processing unit 51 executes S120 for obtaining the corrected first to fourth actual sound sources by correcting the first to fourth actual sound sources with the sub correction values, respectively.

The central processing unit 51 executes S130 and S140 to synthesize the corrected first to fourth actual use sound sources and to control the sounding body 30 to reproduce the synthesized corrected first to fourth actual use sound source from the sounding body 30.

As described above, since the corrected first to fourth actual use sound sources that are obtained by correcting the respective actual use sound sources with the sub correction values are synthesized and reproduced from the sounding body 30, it is possible to reduce variation in sound pressure among electric devices.

The electric device 10 of the present embodiment includes the nonvolatile memory 54 that stores the candidate value group of the main correction values for correcting the respective sound pressures of the first to fourth actual use sound sources reproduced from the sounding body 30 when the first to fourth actual use sound sources are reproduced by the sounding body 30.

In S110, the central processing unit 51 selects, for the respective actual use sound sources, candidate values that match the vehicle information provided from the external electronic control device from the candidate value group of the main correction values.

The central processing unit 51 obtains the corrected first to fourth actual use sound sources by correcting the respective first to fourth actual use sound sources with the main correction values and the sub correction values.

The central processing unit 51 synthesizes the corrected first to fourth actual use sound sources and control the sounding body 30 to reproduce the synthesized corrected first to fourth actual use sound source from the sounding body 30.

Accordingly, a sound pressure matching the vehicle information can be output from the sounding body 30.

The electric device 10 of the present embodiment includes the circuit board 40 mounted with the microcomputer 50 including the central processing unit 51 and the nonvolatile memory 54, and the housing 20 housing the sounding body 30 and the circuit board 40.

Therefore, the sounding body 30 and the circuit board 40 are combined to be specified one-to-one. Therefore, a sound pressure inspection at the time of factory shipment of the electric device 10 is performed once, and the sound pressure level can be guaranteed for a system including the sounding body 30 and the circuit board 40 (that is, the electric device 10).

Furthermore, the manufacturing method of the electric device 10 of the present embodiment includes the processing in S200 of preparing the workpiece 10A of the electric device 10 including the sounding body 30, the central processing unit 51 that controls the sounding body 30, and the nonvolatile memory 54 that stores the first to fourth actual use sound sources.

The manufacturing method of the electric device 10 includes the processing in S210 in which the controller 110 controls the sounding body 30 via the central processing unit 51 to cause the sounding body 30 to generate the inspection sound in a frequency band including the respective frequency bands of the first to fourth actual use sound sources.

The manufacturing method of the electric device 10 includes the processing in S220 of causing the sound pressure inspection device 130 to detect the sound pressure of the inspection sound generated from the sounding body 30 when the sounding body 30 generates the inspection sound.

The manufacturing method of the electric device 10 includes the processing in S230 in which the controller 110 calculates the plurality of sub correction values based on the sound pressures detected by the sound pressure inspection device 130.

The plurality of sub correction values are sub correction values for the respective actual use sound sources and for bringing the sound pressures of the first to fourth actual use sound sources, which are generated from the sounding body 30 when the first to fourth actual use sound sources are reproduced by the sounding body 30, close to the target values.

The manufacturing method of the electric device 10 includes the processing in S240 in which the controller 110 stores the plurality of sub correction values in the nonvolatile memory 54 of the workpiece 10A of the electric device 10.

Accordingly, it is possible to provide a manufacturing method for the electric device 10 in which variation in sound pressure among electric devices is reduced.

### (Second Embodiment)

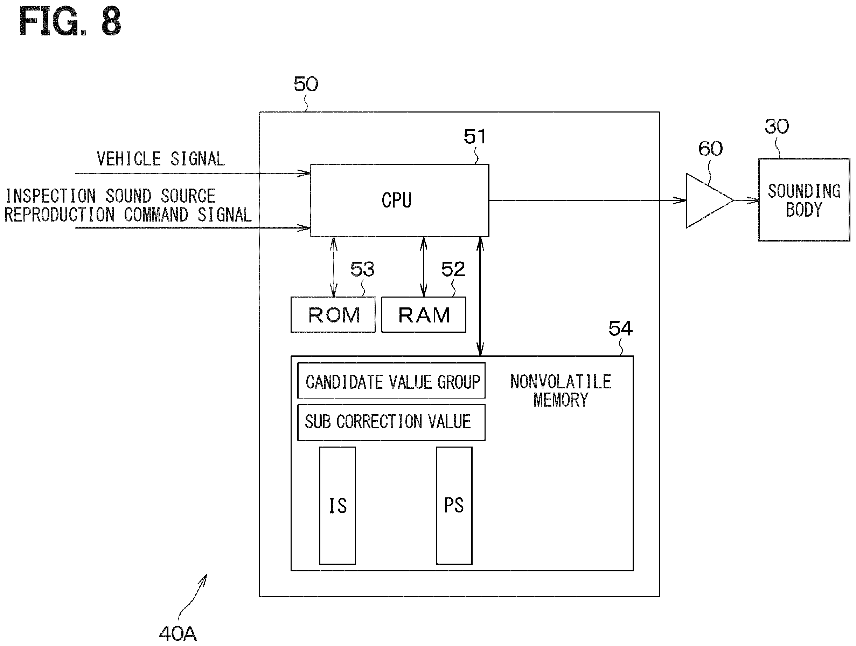

In the first embodiment, an example in which the electric device 10 includes the nonvolatile memory 54 storing the four first to fourth actual use sound sources has been described. Instead of the above-described example, a second embodiment that uses an electric device 10 including a nonvolatile memory 54 storing one actual use sound source will be described with reference to FIGS. 8, 9, and 10.

The electric device 10 of the present embodiment and the electric device 10 of the first embodiment are different from each other in the number of actual use sound sources, the candidate value of the main correction value, and the sub correction value stored in the nonvolatile memory 54. A hardware configuration of the electric device 10 of the present embodiment other than the nonvolatile memory 54 is substantially the same as that of the first embodiment. Hereinafter, differences between the present embodiment and the first embodiment will be mainly described.

The nonvolatile memory 54 of the microcomputer 50 of the present embodiment stores one actual use sound source (PS). The nonvolatile memory 54 stores candidate values of the main correction value used for correcting the one actual use sound source. The nonvolatile memory 54 stores a sub correction value used for correcting the one actual use sound source.

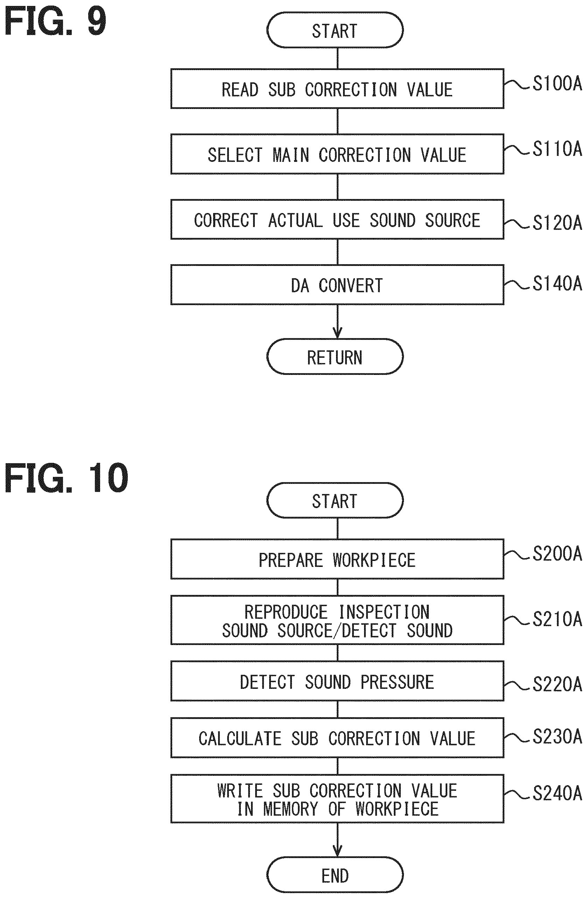

The electric device 10 of the present embodiment and the electric device 10 of the first embodiment are different from each other in the approach notification processing executed by the central processing unit 51. The central processing unit 51 of the electric device 10 of the present embodiment executes the approach notification processing according to a flowchart of FIG. 9 instead of FIG. 4. FIG. 9 is a flowchart illustrating the details of the approach notification processing executed by the central processing unit 51.

First, in S100A, the central processing unit 51 reads the sub correction value from the nonvolatile memory 54.

Next, in S110A, the central processing unit 51 selects a main correction value that matches the speed, the traveling direction, the destination, and the like of the vehicle based on the vehicle signal supplied from an external electronic control unit from the candidate value group of the main correction value stored in the nonvolatile memory 54.

Next, in S120A, the central processing unit 51 reads the actual use sound source from the nonvolatile memory 54, corrects the actual use sound source with the main correction value and the sub correction value, and obtains the corrected actual use sound source.

Next, in S140A, the central processing unit 51 converts the corrected actual use sound source obtained in S120A described above from a digital signal to an analog signal, and outputs the converted analog signal to the power amplifier circuit 60.

The central processing unit 51 repeatedly executes the sub correction value reading processing in S100A, the main correction value reading processing in S110A, the actual sound source correction processing in S120A, and the DA conversion processing in S140A.

Then, the power amplifier circuit 60 amplifies the power of the analog signal output from the central processing unit 51 and outputs the power-amplified analog signal to the sounding body 30. Accordingly, the sounding body 30 generates an approach notification sound based on the analog signal output from the power amplifier circuit 60.

As described above, in S140A, the central processing unit 51 controls the sounding body 30 to reproduce the corrected actual use sound source from the sounding body 30.

Next, a manufacturing system 100 for writing the sub correction value for the actual use sound source in the nonvolatile memory 54 of the workpiece 10A of the electric device 10 of the present embodiment will be described with reference to FIG. 10.

The manufacturing system 100 of the present embodiment includes a controller 110, a microphone 120, and a sound pressure inspection device 130, similarly to the above-described first embodiment, and is used in a manufacturing process for writing the sub correction value for the actual use sound source in the nonvolatile memory 54 of the workpiece 10A.

The manufacturing process is different between the present embodiment and the first embodiment. Hereinafter, the manufacturing process of the present embodiment will be described with reference to FIG. 10. FIG. 10 is a flowchart illustrating details of the manufacturing process.

First, in S200A, the workpiece 10A of the electric device 10 in which the sub correction value for the actual use sound source is not stored in the nonvolatile memory 54 is prepared, and the prepared workpiece 10A is disposed in the soundproof box 140.

At this time, the workpiece 10A and the controller 110 are connected by a LAN. Accordingly, preparation for writing the sub correction value for the actual use sound source in the nonvolatile memory 54 of the workpiece 10A is performed.

Next, in S210A, the controller 110 outputs an inspection sound source reproduction command signal for reproducing the inspection sound source to the central processing unit 51 of the workpiece 10A.

At this time, in response to receiving the inspection sound source reproduction command signal from the controller 110, the central processing unit 51 of the workpiece 10A starts execution of the inspection processing according to the flowchart of FIG. 7, similarly to the first embodiment.

First, in S300, the central processing unit 51 reads the inspection sound source having a constant sound pressure from the nonvolatile memory 54, converts the read inspection sound source into an analog signal, and outputs the converted analog signal to the power amplifier circuit 60. Then, the power amplifier circuit 60 amplifies the power of the analog signal, and outputs the power-amplified analog signal to the sounding body 30 as an output signal. At this time, the sounding body 30 is driven by the output signal of the power amplifier circuit 60 and generates the inspection sound in the soundproof box 140.

Here, the frequency band of the inspection sound is set to include the frequency band of the actual use sound source stored in the nonvolatile memory 54.

At this time, the microphone 120 detects the inspection sound generated from the sounding body 30 in the soundproof box 140 and outputs a detection signal indicating the detected inspection sound to the sound pressure inspection device 130.

Next, in S220A, the sound pressure inspection device 130 performs frequency analysis on the detection signal output from the microphone 120. The sound pressure inspection device 130 detects the sound pressure in the frequency band of the actual use sound source in the inspection sound based on the result of the frequency analysis.

Next, in S230A, the controller 110 calculates the sub correction value based on the sound pressure of the inspection sound detected by the sound pressure inspection device 130. The sub correction value of the actual use sound source is a correction value for bringing the level of the sound pressure generated from the sounding body 30 when the actual use sound source is reproduced from the sounding body 30 close to the target value.

Next, in S240A, the controller 110 writes the sub correction value for the actual use sound source to the nonvolatile memory 54 of the workpiece 10A.

As described above, the sub correction value can be stored in the nonvolatile memory 54 of the workpiece 10A.

According to the present embodiment described above, the electric device 10 includes the sounding body 30 that generates sound, and the nonvolatile memory 5 that stores the one actual use sound source and the one sub correction value.

The sub correction value is a correction value for correcting the actual use sound source for bringing the sound pressure of the actual use sound source generated from the sounding body 30 when the actual use sound source is reproduced by the sounding body 30 close to the target value.

In S120A, the central processing unit 51 reads the actual use sound source from the nonvolatile memory 54, corrects the actual use sound source with the sub correction value, and obtains the corrected actual use sound source.

Next, in S140A, the central processing unit 51 controls the sounding body 30 to reproduce the obtained corrected actual use sound source from the sounding body 30.

As described above, since the corrected actual use sound source, which is corrected by the sub correction value, is reproduced from the sounding body 30, it is possible to reduce the variation in sound pressure among electric devices.

Furthermore, in the present embodiment, the nonvolatile memory 54 stores the candidate value group of the main correction value for correcting the sound pressure of the actual sound source reproduced from the sounding body 30.

In S110A, the central processing unit 51 selects, as the main correction value of the actual use sound source, the candidate value that matches the vehicle information provided from the external electronic control unit from the candidate value group of the main correction value.

In S120A and S140A, the central processing unit 51 obtains the corrected actual use sound source that is obtained by correcting the actual use sound source with the sub correction value, and controls the sounding body 30 to reproduce the obtained corrected actual use sound source from the sounding body 30.

Accordingly, a sound pressure matching the vehicle information can be output from the sounding body 30.

Furthermore, the manufacturing method of the electric device 10 of the present embodiment includes the processing in S200A of preparing the workpiece 10A of the electric device 10 including the sounding body 30, the central processing unit 51 that controls the sounding body 30, and the nonvolatile memory 54 that stores the actual use sound source.

The manufacturing method of the electric device 10 includes the processing in S210A in which the controller 110 controls the sounding body 30 via the central processing unit 51 to cause the sounding body 30 to generate the inspection sound in the frequency band including the frequency band of the actual use sound source.

The manufacturing method of the electric device 10 includes the processing in S220A of causing the sound pressure inspection device 130 to detect the sound pressure of the inspection sound generated from the sounding body 30 when the sounding body 30 generates the inspection sound.

The manufacturing method of the electric device 10 includes the processing in S230A in which the controller 110 calculates the sub correction values based on the sound pressure detected by the sound pressure inspection device 130.

The manufacturing method of the electric device 10 includes the processing in S240A in which the controller 110 stores the sub correction value in the nonvolatile memory 54 of the workpiece 10A of the electric device 10.

Accordingly, it is possible to provide a manufacturing method of the electric device 10 in which variation in sound pressure among electric devices is reduced.

### (Other Embodiments)

(1) In the first embodiment, the example has been described in which the approach notification sound is generated from the sounding body 30 by using the four first to fourth actual use sound sources stored in the nonvolatile memory 54. In the second embodiment, the example has been described in which the approach notification sound is generated from the sounding body 30 using the actual sound source stored in the nonvolatile memory 54.
   However, the number of actual sound sources stored in the nonvolatile memory 54 may be 2, 3, or 5 or more.
(2) In the first embodiment, the example has been described in which the four actual use sound sources stored in the nonvolatile memory 54 are corrected by the main correction values and the sub correction values, and the synthetic actual use sound source obtained by synthesizing the corrected four corrected actual use sound sources is converted from the digital signal to the analog signal.
   However, instead of this example, the central processing unit 51 may select any one of the plurality of actual use sound sources stored in the nonvolatile memory 54 as in the following (a) and (b).
   (a) For example, in a case where the number of the selected actual use sound sources is one, the central processing unit 51 corrects the selected one actual use sound source with the main correction value and the sub correction value to obtain the corrected actual use sound source. Furthermore, the central processing unit 51 converts the obtained corrected actual use sound source from a digital signal to an analog signal and outputs the analog signal to the power amplifier circuit 60.
   (b) In a case where the number of the selected actual use sound sources is plural, the selected actual use sound sources are corrected by the main correction values and the sub correction values to obtain corrected actual use sound sources. Furthermore, the central processing unit 51 synthesizes the corrected actual use sound sources to generate a synthesized actual use sound source, converts the generated synthesized actual use sound source from a digital signal into an analog signal, and outputs the analog signal to the power amplifier circuit 60.
(3) In the first and second embodiments, the examples have been described in which the electric device of the present disclosure is the electric device 10 that generates the approach notification sound. However, instead of these examples, the electric device 10 that generates a sound other than the approach notification sound may also be used as the electric device 10 of the present disclosure.
(4) In the first and second embodiments, the examples have been described in which the electric device of the present disclosure is the vehicle electric device 10 mounted on the vehicle. However, instead of these examples, the electric device of the present disclosure may be an installation-type electric device 10 or an electric device 10 mounted on a moving body other than vehicles (for example, trains, electric trains, airplanes, and the like).
(5) In the first and second embodiments, the examples have been described in which a speaker including a voice coil and a diaphragm is used as the sounding body 30. However, instead of these examples, a piezoelectric speaker including a piezoelectric element as a vibrating body may be used as the sounding body 30.
(6) In the first and second embodiments, the examples have been described in which the information indicating the vehicle state such as the speed of the vehicle, the traveling direction of the vehicle, and the destination of the vehicle is used as the vehicle information. However, information other than the vehicle state and the destination may be used as the vehicle information.
(7) The present disclosure is not limited to the above-described embodiments and may be suitably modified. The above-described embodiments are not independent of each other, and can be appropriately combined except when the combination is obviously impossible. In each of the above-described embodiments, individual elements or features of a particular embodiment are not necessarily essential unless it is specifically stated that the elements or the features are essential, or unless the elements or the features are obviously essential in principle. A quantity, a value, an amount, a range, or the like referred to in the description of the embodiments described above is not necessarily limited to such a specific value, amount, range or the like unless it is specifically described as essential or understood as being essential in principle.

## Claims

1. An electric device comprising:
a sounding body (30) configured to generate sound;
a sound source storing unit (54) storing a plurality of actual use sound sources;
a correction value storing unit (54) storing a plurality of correction values for correcting the plurality of actual use sound sources, respectively, so that respective sound pressures of the plurality of actual use sound sources reproduced from the sounding body are brought close to respective target values when the plurality of actual use sound sources is reproduced by the sounding body;
a sound pressure correction unit (51) configured to obtain a plurality of corrected actual use sound sources by correcting the plurality of actual use sound sources with corresponding correction values among the plurality of correction values; and
a control unit (51) configured to synthesize the plurality of corrected actual use sound sources to obtain a synthesized actual use sound source and control the sounding body to reproduce the synthesized actual use sound source from the sounding body.

2. The electric device according to claim 1, wherein
the sound source storing unit, the correction value storing unit, the sound pressure correction unit, the control unit, and the sounding body are configured to be mounted on a vehicle,
the correction value storing unit is a first correction value storing unit, and
the plurality of correction values is a plurality of sub correction values,
the electric device further comprising:
a second correction value storing unit (54) configured to store a candidate value group of a plurality of main correction values for correcting the respective sound pressures of the plurality of actual use sound sources reproduced from the sounding body when the plurality of actual use sound sources is reproduced by the sounding body; and
a correction value selection unit (S110) configured to select, as the plurality of main correction values, respective candidate values for the plurality of actual use sound sources that match information of the vehicle that is provided from an external electronic control unit, from the candidate value group of the plurality of main correction values, wherein
the sound pressure correction unit obtains the plurality of corrected actual use sound sources by correcting the plurality of actual use sound sources with the plurality of main correction values and the plurality of sub correction values, respectively.

3. The electric device according to claim 1 or 2, further comprising:
a circuit board (40) on which the sound source storing unit, the correction value storing unit, the sound pressure correction unit, and the control unit are mounted; and
a housing (20) that houses the sounding body and the circuit board.

4. An electric device comprising:
a sounding body (30) configured to generate sound;
a sound source storing unit (54) storing an actual use sound source;
a correction value storing unit (54) storing a correction value for correcting the actual use sound source so that a sound pressure of the actual use sound source reproduced from the sounding body is brought close to a target value when the actual use sound source is reproduced by the sounding body;
a sound pressure correction unit (51) configured to obtain a corrected actual use sound source by correcting the actual use sound source with the correction value; and
a control unit (51) configured to control the sounding body to reproduce the corrected actual use sound source from the sounding body.

5. The electric device according to claim 4, wherein
the sound source storing unit, the correction value storing unit, the sound pressure correction unit, the control unit, and the sounding body are configured to be mounted on a vehicle,
the correction value storing unit is a first correction value storing unit, and
the correction value is a sub correction value,
the electric device further comprising:
a second correction value storing unit (54) configured to store a candidate value group of a main correction value for correcting the sound pressure of the actual use sound source reproduced from the sounding body when the actual use sound source is reproduced by the sounding body; and
a correction value selection unit (S110A) configured to select, as the main correction value, a candidate value for the actual use sound source that match information of the vehicle that is provided from an external electronic control unit, from the candidate value group of the main correction value, wherein
the sound pressure correction unit is configured to obtain the corrected actual use sound source by correcting the actual use sound source with the main correction value and the sub correction value.

6. The electric device according to claim 4 or 5, wherein
a circuit board (40) on which the sound source storing unit, the correction value storing unit, the sound pressure correction unit, and the control unit are mounted; and
a housing (20) that houses the sounding body and the circuit board.

7. A manufacturing method for an electric device (10), comprising:
preparing a workpiece of the electric device that includes
a sounding body (30),
a control unit (51) configured to control the sounding body, and
a sound source storing unit (54) storing a plurality of actual use sound sources;
controlling the sounding body by a controller (110) via the control unit to cause the sounding body to generate an inspection sound of a frequency band including respective frequency bands of the plurality of actual use sound sources;
causing a sound pressure inspection device (130) to detect a sound pressure of the inspection sound generated by the sounding body;
calculating, by the controller, a plurality of correction values for bringing respective sound pressures of the plurality of actual use sound sources generated from the sounding body to respective target values when the plurality of actual use sound sources is reproduced by the sounding body, based on the sound pressure that is detected by the sound pressure inspection device; and
storing the plurality of correction values that is calculated by the controller on the workpiece.

8. A manufacturing method for an electric device (10), comprising:
preparing a workpiece of the electric device that includes
a sounding body (30),
a control unit (51) configured to control the sounding body, and
a sound source storing unit (54) storing an actual use sound source;
controlling the sounding body by a controller (110) via the control unit to cause the sounding body to generate an inspection sound of a frequency band including a frequency band of the actual use sound source;
causing a sound pressure inspection device (130) to detect a sound pressure of the inspection sound generated by the sounding body;
calculating, by the controller, a correction value for bringing a sound pressure of the actual use sound source generated from the sounding body to a target value when the actual use sound source is reproduced by the sounding body, based on the sound pressure that is detected by the sound pressure inspection device; and
storing the correction value that is calculated by the controller on the workpiece.
